# EUROPÄISCHE PATENTSCHRIFT

(11) **EP 1 317 623 B1**
(45) Veröffentlichungstag und Bekanntmachung des Hinweises auf die Patenterteilung: **09.08.2006**
(21) Anmeldenummer: 01960140.0
(22) Anmeldetag: 02.08.2001
(51) Int. Cl.: F02P 5/152, F02D 41/24

(54) **VERFAHREN ZUR ADAPTIVEN KLOPFREGELUNG EINER BENZINDIREKTEINSPRITZENDEN BRENNKRAFTMASCHINE UND ENTSPRECHENDE VORRICHTUNG**
METHOD FOR ADAPTIVELY CONTROLLING KNOCKING OF A GASOLINE DIRECT FUEL INJECTION INTERNAL COMBUSTION ENGINE, AND A CORRESPONDING DEVICE
PROCEDE DE REGULATION ADAPTATIVE DU CLIQUETIS D'UN MOTEUR A COMBUSTION INTERNE A INJECTION DIRECTE DE L'ESSENCE ET DISPOSITIF CORRESPONDANT

(30) Priorität: 04.09.2000 DE 10043694
(43) Veröffentlichungstag der Anmeldung: 11.06.2003
(73) Patentinhaber: ROBERT BOSCH GMBH, 70442 Stuttgart (DE)
(72) Erfinder: SAULER, Juergen, 70192 Stuttgart (DE); HEINSTEIN, Axel, 71299 Wimsheim (DE)
(86) Internationale Anmeldenummer: PCT/DE2001/002945
(87) Internationale Veröffentlichungsnummer: WO 2002/020981

(56) Entgegenhaltungen:
- DE-A- 4 109 430
- US-A- 5 295 466
- US-A- 5 771 862
- PATENT ABSTRACTS OF JAPAN vol. 2000, no. 10, 17. November 2000 (2000-11-17) & JP 2000 205095 A (MAZDA MOTOR CORP), 25. Juli 2000 (2000-07-25)

## Beschreibung

### Stand der Technik

Die Erfindung geht aus von einem Verfahren zur adaptiven Klopfregelung einer Brennkraftmaschine und einer entsprechenden Vorrichtung nach Gattung der unabhängigen Ansprüche. Es sind bereits Brennkraftmaschinen bekannt, die mit Benzindirekteinspritzung arbeiten. Für den Betrieb dieser Brennkraftmaschinen werden u.a. Betriebsarten wie Homogenbetrieb und Schichtbetrieb oder Homogen-Magerbetrieb unterschieden. Desweiteren ist bereits beispielsweise aus der DE 195 32 504 A1 ein Verfahren und eine entsprechende Vorrichtung zur adaptiven Klopfregelung und eine entsprechende Vorrichtung bekannt, wobei für eine Klopfregelung relevante Zündwinkelspätverstellwinkel in einem Adaptionskennfeld bei Verlassen eines Adaptionskennfeldbereichs gespeichert werden und aus dem Adaptionskennfeld unter bestimmten Bedingungen ausgelesen werden. Dabei ist das Adaptionskennfeld für den Betriebsparameter Last und/oder den Betriebsparameter Drehzahl in Bereiche unterteilt, denen je ein Zündwinkelspätverstellwinkel zugeordnet ist.

Die JP-A-63 113 157 offenbart die Verwendung Separater Klopf-Vorsteuerkennfelder für den mageren und fetten Betrieb zu leunen

### Vorteile der Erfindung

Das erfindungsgemäße Verfahren und die erfindungsgemäße Vorrichtung mit den Merkmalen der unabhängigen Ansprüche haben demgegenüber den Vorteil, dass bei einem häufigen Wechsel der Betriebsarten ein ständiges Überschreiben der Spätverstellwinkel des Adaptionskennfelds und durch das Lesen der Spätverstellwerte aus dem spezifischen Kennfeld das Auftreten unnötiger Klopfer oder zu großer Spätverstellungen verhindert wird.

Durch die in den abhängigen Ansprüchen aufgeführten Maßnahmen sind vorteilhafte Weiterbildungen und Verbesserungen des in den unabhängigen Ansprüchen angegebenen Verfahrens oder der in den unabhängigen Ansprüchen angegebenen Vorrichtung möglich. Um die direkteinspritzende Brennkraftmaschine vorteilhaft zu betreiben, werden derzeit 6 Betriebsarten unterschieden, die vorteilhafterweise auch in Hinblick auf die adaptive Klopfregelung unterschieden werden können. Desweiteren ist es vorteilhaft, als Betriebsparameter, von denen die Adaptionskennfeldwerte abhängig sind, die Last und/oder die Drehzahl zu wählen, da der Zündwinkel und damit auch der Spätverstellwinkel von diesen Parametern in erster Linie beeinflusst wird. Es ist weiterhin vorteilhaft, die Adaptionskennfelder zusätzlich zylinderindividuell vorzusehen, da so zylinderindividuelle Eigenschaften berücksichtigt werden können..

### Beschreibung der Ausführungsbeispiele

Klopfen, d.h. ein anormaler Verbrennungsvorgang im Brennraum einer Brennkraftmaschine, begrenzt die Leistung und den Wirkungsgrad und führt durch die hohen Flammgeschwindigkeiten zu Schädigungen des Brennraums. Um dies zu verhindern, werden in modernen Brennkraftmaschinen Systeme zur Klopferkennung und Klopfregelung integriert. Derartige Systeme sind aus der Literatur hinreichend bekannt, ihre Funktionsweise soll deshalb im Folgenden lediglich kurz zusammengefasst werden.

Mittels der zur Klopferkennung gehörenden Klopfsensoren werden Signale aus dem Brennraum erfasst, die an eine ebenfalls zur Klopferkennung gehörende Auswerteeinheit weitergegeben werden. Derartige Signale können beispielsweise akustische Signale, elektromagnetische Signale, elektrische Signale, Drucksignale oder Temperatursignale sein, die innerhalb oder außerhalb des Brennraums durch die Klopfsensoren aufgenommen werden. Die Auswerteeinheit nimmt eine Verstärkung der Signale vor und integriert die Signale in geeigneter Weise, so dass in einem in der Brennkraftmaschine enthaltenen Mikroprozessor nach einer Analog-/Digitalwandlung der Signale der integrierte Wert mit einem Schwellwert verglichen werden kann, wobei bei Überschreitung des Schwellwerts ein Klopfen erkannt wird. In der Auswerteeinheit kann weiterhin zur Unterdrückung von Störsignalen beispielsweise eine Auswahl eines bestimmten Frequenzbandes bzw. eine Auswahl bezüglich eines bestimmten Zeitfensters erfolgen, wobei das Frequenzband bzw. das Zeitfenster charakteristisch für das Auftreten von Klopfsignalen ist.

Wurde ein Klopfen erkannt, dann wird von dem in der Brennkraftmaschine integrierten Mikroprozessor die Klopfregelung dahingehend vorgenommen, dass zu einem Grundzündwinkel ein Spätverstellwinkel addiert wird, wobei die Summe den Basiszündwinkel bildet. Dabei wird der Spätverstellwinkel im Rahmen dieser Anmeldung als positiver Wert definiert. Von der Momentenstruktur wird aufgrund der Momentenanforderungen ein momentenbasierter Zündwinkel berechnet, der den frühest möglichen Zündwinkel darstellt. Der Basiszündwinkel und der momentenbasierte Zündwinkel werden in dem Verfahren zur Berechnung des Zündwinkels anschließend miteinander verglichen, wobei als zu realisierender Zündwinkel der spätere der beiden Zündwinkel, d.h. der näher am Oberen Totpunkt liegende Zündwinkel, dient. Der Grundzündwinkel wird dabei aus einem last- und/oder drehzahlabhängigen Kennfeld gelesen, das Zündwinkel bei Normbedingungen enthält und im Mikroprozessor der Brennkraftmaschine gespeichert ist. Es enthält Werte für den Grundzündwinkel, die bestimmten Bereichen der Drehzahl und/oder der Last zugeordnet sind. Die Drehzahl wird dabei von Sensoren ermittelt, die vorzugsweise an der Kurbelwelle angebracht sind. Die Last, d.h. die relative Luftfüllung, des jeweiligen Zylinders wird durch den Mikroprozessor aufgrund verschiedener Betriebsparameter wie Drehzahl, Momentenanforderung sowie aufgrund der Messwerte des Heißfilm-Luftmassenmessers (HFM) und des Saugrohrdrucksensors, der Rate des rückgeführten Abgases oder der Stellung der Drosselklappe mit Hilfe von Modellen ermittelt und für die Ermittlung des Grundzündwinkels bereitgestellt. Die relative Luftfüllung ist definiert als das Verhältnis aus der aktuellen Luftfüllung und der Luftfüllung unter Normbedingungen für den jeweiligen Zylinder. Die Spätverstellung des Zündwinkels durch die Klopfregelung erfolgt solange, bis kein Klopfen mehr auftritt. Die Verstellung des Zündwinkels in den einzelnen Schritten addiert sich zu einem Spätverstellwinkel, der die Gesamtverstellung des Zündwinkels bezogen auf den Grundzündwinkel angibt. Tritt über einen bestimmten Zeitraum kein Klopfen mehr auf, dann wird durch die Klopfregelung der Zündwinkel wieder nach früh verstellt, d.h. der Zündwinkel befindet sich bei Kurbelwellenwinkeln, die weiter vor dem oberen Totpunkt liegen. Entsprechend verkleinert sich aufgrund der Frühverstellung des Zündwinkels der Spätverstellwinkel.

Wie beispielsweise aus der DE 195 32 504 bekannt, beinhaltet die adaptive Klopfregelung, dass Spätverstellwinkel in einem adaptiven Kennfeld, das für mindestens einen Betriebsparameter in verschiedene Bereiche unterteilt ist, gespeichert werden oder aus diesem adaptiven Kennfeld gelesen werden. Das adaptive Kennfeld wird im Mikroprozessor gespeichert und dieser steuert auch das Lesen und Speichern der Spätverstellwinkel. Ein aktueller Spätverstellwinkel wird bei Verlassen eines Bereichs des adaptiven Kennfelds vorzugsweise dann gespeichert, wenn der aktuelle Spätverstellwinkel um einen bestimmten, applizierbaren Winkel später liegt als der bisher für den Bereich, der gerade verlassen wird, gespeicherte Spätverstellwinkel. Ein in Bezug auf den bisher gespeicherten Spätverstellwinkel früher liegender aktueller Spätverstellwinkel kann ebenfalls unter der Bedingung, dass der aktuelle Spätverstellwinkel schon über einen bestimmten Zeitraum verwendet wurde, ebenfalls bei Verlassen eines Bereichs des adaptiven Kennfelds in dem jeweiligen Kennfeldbereich gespeichert werden. Unter bestimmten Bedingungen, beispielsweise wenn auf eine Klopfregelung mit adaptivem Kennfeld umgeschaltet wird, wird der entsprechende Spätverstellwinkel aus dem Bereich des adaptiven Kennfelds gelesen, der den mindestens einen aktuellen Betriebsparameter einschließt. Ebenso wird ein Spätverstellwinkel aus dem adaptiven Kennfeld gelesen, wenn der Wert mindestens eines aktuellen Betriebsparameters sich so ändert, dass er in einen anderen Bereich des adaptiven Kennfelds fällt. Es wird dann der Spätverstellwinkel aus dem anderen Bereich des adaptiven Kennfelds gelesen. In einem weiteren Ausführungsbeispiel wird der Spätverstellwinkel nur dann aus dem anderen Bereich des adaptiven Kennfelds gelesen, wenn eine Dynamik in mindestens einem Betriebsparameter aufgetreten ist, d.h. wenn die Änderung des mindestens einen Betriebsparameters in einem bestimmten Zeitraum einen bestimmten, applizierbaren Schwellwert überschreitet. Der aus dem adaptiven Kennfeld gelesene Spätverstellwinkel wird in allen geschilderten Beispielen als neuer aktueller Spätverstellwinkel benutzt.

Es sind bereits Brennkraftmaschinen mit Benzindirekteinspritzung bekannt, wobei für den Betrieb derartiger Brennkraftmaschinen verschiedene Betriebsarten unterschieden werden. Als Betriebsarten werden Betriebsmodi oder Betriebszustände bezeichnet, die durch den Zustand wichtiger Betriebsgrößen und/oder zugrunde liegende Modellvorstellungen charakterisiert werden. Innerhalb einer Betriebsart sind die Zustände der Betriebsgrößen dann nur in bestimmten Grenzen variabel. Wichtige Betriebsgrößen sind hierbei beispielsweise der Zeitpunkt der Einspritzung, die Anzahl der Einspritzvorgänge, die Menge des einzuspritzenden Kraftstoffs und damit auch das Kraftstoff-Luft-Verhältnis λ, die Zündwinkelspätverstellung oder der Zündwinkel. Zugrunde liegende Modellvorstellungen können dabei das Momentenmodell oder andere Modelle nicht messbarer Größen sein, die der Berechnung von sämtlichen Betriebsgrößen dienen können. Dabei kann die Anwendung eines bestimmten Modells beispielsweise unabhängig von anderen Parametern eingeschaltet werden, beispielsweise beim Vorliegen bestimmter, nicht messbarer äußerer Umstände. In einem anderen Ausführungsbeispiel kann die Anwendung eines bestimmten Modells, beispielsweise für das Drehmoment oder die Vorgänge im Saugrohr, durch den Mikroprozessor initiiert werden, wenn bestimmte Anforderungen vorliegen und/oder Betriebsgrößen bestimmte Werte aufweisen. Beispielsweise wird bei hohen Drehzahlen, wenn außerdem durch die Stellung des Gaspedals noch eine hohe Beschleunigung gefordert wird, die Verwendung des Drehmomentenmodells für ein im Brennraum vorliegendes homogenes Gemisch mit einem Kraftstoff-Luft-Verhältnis nahe 1 zugrunde gelegt. Sind die Drehzahlen gering und die durch die Stellung des Gaspedals gewünschte Dynamik klein, wird ein anderes Drehmomentenmodell zugrunde gelegt, das beispielsweise für ein im Brennraum geschichtetes Gemisch richtig ist.

Folgende Betriebsarten werden unterschieden und durch den Mikroprozessor gesteuert: Homogen, Homogen-Mager, Schicht, Homogen-Schicht, Homogen-Klopfschutz und Schicht-Katheizen. Die hier dargestellte Erfindung ist jedoch nicht auf die hier aufgezählten Betriebsarten beschränkt, das Verfahren bzw. die Vorrichtung kann analog auch für andere Betriebsarten Verwendung finden.

Die folgende Beschreibung der Betriebsarten bezieht sich auf das Viertaktverfahren, dass für benzindirekteinspritzende Brennkraftmaschinen überwiegend verwendet wird. Die vier Takte werden in dieser Reihenfolge als Ansaugtakt, Kompressionstakt, Arbeitstakt und Ausstoßtakt bezeichnet.

In der Betriebsart Homogen wird im Ansaugtakt Kraftstoff in den Brennraum einmalig eingespritzt, wobei die eingespritzte Kraftstoffmenge so bemessen ist, dass das Kraftstoff-Luft-Verhältnis λ bei etwa 1 liegt. Der Kraftstoff vermischt sich so mit der im Brennraum befindlichen Luft, dass eine gleichmäßige Verteilung des Kraftstoffs vorliegt. In dieser Betriebsart wird ein sich von den übrigen hier erwähnten Betriebsarten unterscheidendes Drehmomentenmodell angewendet.

Als Betriebsart Homogen-Mager wird die Betriebsart bezeichnet, bei der die Verteilung des Kraftstoffs im Brennraum ebenfalls gleichmäßig ist, das realisierte Kraftstoff-Luft-Verhältnis jedoch deutlich über 1 liegt.

Dies wird erreicht, indem eine gegenüber der Betriebsart Homogen deutlich geringere Kraftstoffmenge in den Brennraum eingespritzt wird. Die Einspritzung erfolgt dabei wiederum einmalig im Ansaugtakt.

In der Betriebsart Schicht wird der Kraftstoff so spät, d.h. im Kompressionstakt, in den Brennraum eingespritzt, dass eine gleichmäßige Verteilung des Kraftstoffs nicht mehr erfolgt. So existiert lediglich in der Nähe der Zündkerze eine zündfähige Gemischwolke, d.h. es tritt eine schichtartige Verteilung des Kraftstoff-Luft-Gemischs auf.

Als Betriebsart Homogen-Schicht wird der Betriebsmodus bezeichnet, in der sowohl im Ansaugtakt als auch im Kompressionstakt eingespritzt wird. Mit der ersten Einspritzung wird ein mageres, gleichmäßig im Brennraum verteiltes Grundgemisch erzeugt, in das während der zweiten Einspritzung eine fette, gut entflammbare Schichtwolke in der Nähe der Zündkerze abgesetzt wird. Die von dem fetten Gemisch erzeugte Flammme kann sich in das magere Grundgemisch ausbreiten, so dass dieses ebenfalls vollständig umgesetzt wird.

In der Betriebsart Homogen-Klopfschutz wird analog zur Betriebsart Homogen-Schicht im Ansaugtrakt und im Kompressionstakt eingespritzt, wobei jedoch die Betriebsart Klopfschutz dann eingesetzt wird, wenn der aufgrund von Klopfen erreichte Spätverstellwinkel des Zündwinkels zu groß und somit auch der Momentenverlust durch den großen Spätverstellwinkel zu groß wird. Durch die Betriebsart Homogen-Klopfschutz wird durch die Kühlwirkung des später eingespritzten Kraftstoffs und durch die mageren Randbereiche eine Verringerung der Klopfneigung des im Brennraum befindlichen Kraftstoff-/Luftgemischs erreicht, so dass die klopfbedingte Spätverstellung des Zündwinkels reduziert werden kann. Damit ist eine Verbesserung des Wirkungsgrads möglich.

Als Betriebsart Schicht-Katheizen wird die Betriebsart bezeichnet, in der sowohl im Kompressionstakt als auch im Arbeitstakt Kraftstoff in den Brennraum eingespritzt wird. Insbesondere der im zweiten Einspritzvorgang eingespritzte Kraftstoff verbrennt sehr spät und heizt so den Abgasstrang stark auf. So erreichen verschiedene Katalysatorteile schnell ihre Betriebstemperatur.

Ein erstes Ausführungsbeispiel des erfindungsgemäßen Verfahrens und der erfindungsgemäßen Vorrichtung beinhaltet, dass für mindestens zwei der oben genannten Betriebsarten unterschiedliche Adaptionskennfelder im Mikroprozessor der Brennkraftmaschine gespeichert sind. Dabei können sich die Adaptionskennfelder in den in den einzelnen Adaptionskennfeldbereichen gespeicherten Werten sowie durch unterschiedliche Aufteilung und/oder Größe der Kennfeldbereiche unterscheiden. Beispielsweise existiert für die Betriebsart Homogen ein erstes Adaptionskennfeld und für die Betriebsart Homogen-Mager ein zweites Adaptionskennfeld. Da die Betriebsart Homogen in allen Last- und/oder Drehzahlbereichen gefahren werden kann, umfasst das erste Adaptionskennfeld sämtliche Last- und/oder Drehzahlbereiche. Beispielsweise sind die auftretenden Lasten in 4 Bereiche und die auftretenden Drehzahlen in 6 Bereiche eingeteilt, sodass das daraus resultierende erste Adaptionskennfeld 24 Kennfeldbereiche aufweist. Die Betriebsart Homogen-Mager wird demgegenüber nur bei kleinen Lasten und Drehzahlen gefahren wird, umfasst das zweite Adaptionskennfeld beispielsweise lediglich 2 Lastbereiche, sodass das zweite Adaptionskennfeld insgesamt 12 Bereiche aufweist, die sich auch in ihrer Größe von der Größe der Adaptionskennfelder des ersten Adaptionskennfelds unterscheiden können. In einem weiteren Ausführungsbeispiel könnte auch die Zahl der Drehzahlbereiche geändert werden, so dass das zweite Adaptionskennfeld beispielsweise 2 Last- und 3 Drehzahlbereiche umfassen würde, woraus sich insgesamt 6 Bereiche für das zweite Adaptionskennfeld ergeben.

Nimmt nun aufgrund einer geänderten Momentenanforderung, einer höheren Drehzahl, einer geänderten Dynamik usw. der Mikroprozessor eine Änderung der Betriebsart beispielsweise von Homogen-Mager auf Homogen vor, dann wird in der erfindungsgemäßen Vorrichtung bzw. in dem erfindungsgemäßen Verfahren der aktuelle Spätverstellwert für die Ermittlung des Basiszündwinkels aus dem ersten Adaptionskennfeld für die neue Betriebsart Homogen gelesen. Dabei wird der Spätverstellwert aus dem Bereich des ersten Adaptionskennfelds gelesen, der der aktuellen Last und der aktuellen Drehzahl entspricht. Der in der Betriebsart Homogen-Mager realisierte Spätverstellwert wird nicht verwendet. Entsprechend wird bei einer Umschaltung in eine andere Betriebsart der Spätverstellwert aus dem den aktuellen Betriebsparametern entsprechenden Bereich des Adaptionskennfelds der anderen Betriebsart gelesen.

In einem weiteren Ausführungsbeispiel der Erfindung werden die Adaptionskennfelder zylinderindividuell bereitgestellt, so dass für jeden Zylinder und jede Betriebsart ein eigenes Adaptionskennfeld vorhanden ist. Somit können auch die zylinderindividuellen Gegebenheiten optimal berücksichtigt werden. Der jeweils aktuelle Zylinder wird mit Hilfe von Nocken- und/oder Kurbelwellensensoren und der im Mikroprozessor enthaltenen Zylindererkennung ermittelt.

In einem weiteren Ausführungsbeispiel der Erfindung kann für jede Betriebsart anstatt eines Adaptionskennfelds auch jeweils eine Rechenvorschrift bereitgestellt werden, mit Hilfe der die Spätverstellwinkel berechnet werden können. Die Berechnung wird dabei vom Mikroprozessor der Brennkraftmaschine durchgeführt. Die Rechenvorschrift kann beispielsweise dadurch adaptiert werden, dass abhängig von aktuellen Spätverstellwinkeln die Parameter der ensprechend verwendeten Rechenvorschrift angepasst werden. Die Rechenvorschrift ist dabei, analog wie das Adaptionskennfeld abhängig von Betriebsparametern wie Last und/oder Drehzahl. In einem bevorzugten Ausführungsbeispiel wird dabei analog zu obigen Ausführungsbeispielen für das Adaptionskennfeld nach einem Wechsel von einer alten Betriebsart in eine neue Betriebsart die Rechenvorschrift der neuen Betriebsart für die Berechnung des Spätverstellwinkels herangezogen. Die Rechenvorschrift kann in einem weiteren Ausführungsbeispiel zusätzlich auch zylinderindividuell im Mikroprozessor der Brennkraftmaschine realisiert sein.

Aufgrund der Bereitstellung von unterschiedlichen Adaptionskennfeldern oder unterschiedlichen Rechenvorschriften für verschiedene Betriebsarten wird gewährleistet, dass für jede Betriebsart ein den entsprechenden Bedingungen angepasstes Adaptionskennfeld vorhanden ist, so dass die Anzahl der Überschreibungsvorgänge minimiert werden können. Desweiteren werden unnötige Klopfer vermieden, da bei einem Wechsel der Betriebsart stets der "richtige" Spätverstellwert bereit gestellt werden kann.

## Patentansprüche

1. Verfahren zur adaptiven Klopfregelung einer benzindirekteinspritzenden Brennkraftmaschine, die in mindestens zwei Betriebszuständen der Betriebszustände Homogen, Homogen-Mager, Schichtbetrieb, Homogen-Schichtbetrieb, Katheizen und Klopfschutz betrieben wird,
- wobei in der Betriebsart Homogen in einem Ansaugtakt Kraftstoff in einen Brennraum einmalig eingespritzt wird, wobei die eingespritzte Kraftstoffmenge so bemessen ist, dass das Kraftstoff-Luft-Verhältnis λ bei etwa 1 liegt,
- wobei die Betriebsart Homogen-Mager der Betriebsart Homogen entspricht, das realisierte Kraftstoff-Luft-Verhältnis jedoch deutlich über 1 liegt,
- wobei in der Betriebsart Schicht der Kraftstoff so spät, d.h. in einem Kompressionstakt, in den Brennraum eingespritzt wird, dass eine gleichmäßige Verteilung des Kraftstoffs nicht mehr erfolgt,
- wobei in der Betriebsart Homogen-Schicht sowohl im Ansaugtakt als auch im Kompressionstakt eingespritzt wird, wodurch mit der ersten Einspritzung ein mageres, gleichmäßig im Brennraum verteiltes Grundgemisch erzeugt wird, in das während der zweiten Einspritzung eine fette, gut entflammbare Schichtwolke in der Nähe der Zündkerze abgesetzt wird,
- wobei in der Betriebsart Homogen-Klopfschutz im Ansaugtrakt und im Kompressionstakt eingespritzt wird, wobei jedoch die Betriebsart Klopfschutz dann eingesetzt wird, wenn der aufgrund von Klopfen erreichte Spätverstellwinkel des Zündwinkels zu groß und somit auch ein Momentenverlust der Brennkraftmaschine durch den großen Spätverstellwinkel zu groß wird,
- wobei in der Betriebsart Katheizen sowohl im Kompressionstakt als auch in einem Arbeitstakt Kraftstoff in den Brennraum eingespritzt wird,
- wobei für eine Klopfregelung relevante Spätverstellwinkel des Zündwinkels mittels einer anpassbaren Rechenvorschrift berechnet oder in einem Adaptionskennfeld gespeichert werden und aus dem Adaptionskennfeld ausgelesen werden,
- wobei das Adaptionskennfeld für mindestens einen Betriebsparameter in Bereiche unterteilt ist, denen je ein Spätverstellwinkel zugeordnet ist,
- wobei für die mindestens zwei Betriebszustände jeweils ein separates Adaptionskennfeld oder jeweils eine separate anpassbare Rechenvorschrift vorgesehen wird,
- wobei bei einem Wechsel des Betriebszustands der aktuelle Spätverstellwinkel aus dem Adaptionskennfeld des neuen Betriebszustands gelesen wird oder mittels der neuen anpassbaren Rechenvorschrift berechnet wird,
- wobei in Abhängigkeit von Klopfen der Brennkraftmaschine eine Speicherung von Spätverstellwinkeln in den Adaptionskennfeldern erfolgt oder eine Anpassung der Rechenvorschrift erfolgt.

2. Verfahren nach Anspruch 1, wobei die für die mindestens zwei Betriebszustände vorgesehenen Adaptionskennfelder oder die für die mindestens zwei Betriebszustände vorgesehenen Rechenvorschriften zusätzlich zylinderindividuell unterschieden werden.

3. Verfahren nach einem der vorhergehenden Ansprüche, wobei ein aktueller Spätverstellwinkel bei Verlassen eines Bereichs des adaptiven Kennfelds gespeichert wird,
- wenn der aktuelle Spätverstellwinkel um einen bestimmten, applizierbaren Winkel später liegt als der bisher für den Bereich, der gerade verlassen wird, gespeicherte Spätverstellwinkel.

4. Verfahren nach einem der vorhergehenden Ansprüche, wobei ein in Bezug auf den bisher gespeicherten Spätverstellwinkel früher liegender aktueller Spätverstellwinkel gespeichert wird wenn der aktuelle Spätverstellwinkel schon über einen bestimmten Zeitraum verwendet wurde.

5. Vorrichtung zur adaptiven Klopfregelung einer benzindirekteinspritzenden Brennkraftmaschine, die in mindestens zwei Betriebszuständen der Betriebszustände Homogen, Homogen-Mager, Schichtbetrieb, Homogen-Schichtbetrieb, Katheizen und Klopfschutz betrieben wird,
- wobei in der Betriebsart Homogen in einem Ansaugtakt Kraftstoff in einen Brennraum einmalig eingespritzt wird, wobei die eingespritzte Kraftstoffmenge so bemessen ist, dass das Kraftstoff-Luft-Verhältnis λ bei etwa 1 liegt,
- wobei die Betriebsart Homogen-Mager der Betriebsart Homogen entspricht, das realisierte Kraftstoff-Luft-Verhältnis jedoch deutlich über 1 liegt,
- wobei in der Betriebsart Schicht der Kraftstoff so spät, d.h. in einem Kompressionstakt, in den Brennraum eingespritzt wird, dass eine gleichmäßige Verteilung des Kraftstoffs nicht mehr erfolgt,
- wobei in der Betriebsart Homogen-Schicht sowohl im Ansaugtakt als auch im Kompressionstakt eingespritzt wird, wodurch mit der ersten Einspritzung ein mageres, gleichmäßig im Brennraum verteiltes Grundgemisch erzeugt wird, in das während der zweiten Einspritzung eine fette, gut entflammbare Schichtwolke in der Nähe der Zündkerze abgesetzt wird,
- wobei in der Betriebsart Homogen-Klopfschutz im Ansaugtrakt und im Kompressionstakt eingespritzt wird, wobei jedoch die Betriebsart Klopfschutz dann eingesetzt wird, wenn der aufgrund von Klopfen erreichte Spätverstellwinkel des Zündwinkels zu groß und somit auch ein Momentenverlust der Brennkraftmaschine durch den großen Spätverstellwinkel zu groß wird,
- wobei in der Betriebsart Katheizen sowohl im Kompressionstakt als auch in einem Arbeitstakt Kraftstoff in den Brennraum eingespritzt wird,
- wobei für eine Klopfregelung relevante Spätverstellwinkel des Zündwinkels mittels einer anpassbaren Rechenvorschrift berechnet werden oder in einem Adaptionskennfeld gespeichert sind und aus dem Adaptionskennfeld ausgelesen werden,
- wobei das Adaptionskennfeld für mindestens einen Betriebsparameter in Bereiche unterteilt ist, denen je ein Spätverstellwinkel zugeordnet ist,
- wobei für die mindestens zwei Betriebszustände jeweils ein separates Adaptionskennfeld oder jeweils eine separate anpassbare Rechenvorschrift vorgesehen ist,
- wobei bei einem Wechsel des Betriebszustands der aktuelle Spätverstellwinkel aus dem Adaptionskennfeld des neuen Betriebszustands gelesen wird oder mittels der neuen anpassbaren Rechenvorschrift berechnet wird,
- wobei in Abhängigkeit von Klopfen der Brennkraftmaschine eine Speicherung von Spätverstellwinkeln in den Adaptionskennfeldern erfolgt oder eine Anpassung der Rechenvorschrift erfolgt.

6. Vorrichtung nach Anspruch 5, wobei die für die mindestens zwei Betriebszustände vorgesehenen Adaptionskennfelder oder die für die mindestens zwei Betriebszustände vorgesehenen Rechenvorschriften zusätzlich zylinderindividuell unterschieden sind.

7. Vorrichtung nach einem der Ansprüche 5 oder 6, wobei ein aktueller Spätverstellwinkel bei Verlassen eines Bereichs des adaptiven Kennfelds gespeichert wird,
- wenn der aktuelle Spätverstellwinkel um einen bestimmten, applizierbaren Winkel später liegt als der bisher für den Bereich, der gerade verlassen wird, gespeicherte Spätverstellwinkel.

8. Vorrichtung nach einem der Ansprüche 5 bis 7, wobei ein in Bezug auf den bisher gespeicherten Spätverstellwinkel früher liegender aktueller Spätverstellwinkel gespeichert wird wenn der aktuelle Spätverstellwinkel schon über einen bestimmten Zeitraum verwendet wurde.

## Claims

1. Method for adaptive knock control of a petrol direct fuel injection internal combustion engine which is operated in least two of the homogeneous, homogeneous-lean, stratified charge, homogeneous-stratified-charge, catalytic converter heating and knock prevention operating states,
- fuel being injected once into a combustion chamber in an intake stroke in the homogeneous operating mode, the injected fuel quantity being dimensioned such that the air/fuel ratio λ is approximately 1,
- the homogeneous-lean operating mode corresponding to the homogeneous operating mode, but with the air/fuel ratio obtained being considerably greater than 1,
- the fuel being injected into the combustion chamber so late, that is to say in a compression stroke, in the stratified charge operating mode that there is no longer a uniform distribution of the fuel,
- fuel being injected both in the intake stroke and in the compression stroke in the homogeneous-stratified-charge operating mode, as a result of which a lean basic mixture which is distributed uniformly in the combustion chamber, and into which a rich, highly inflammable stratified cloud is discharged in the vicinity of the spark plug is generated by the first injection,
- fuel being injected both in the intake stroke and in the compression stroke in the homogeneous-knock-prevention operating mode, the knock prevention operating mode however then being implemented when the retarded-adjustment angle of the ignition angle obtained on account of knock becomes too large and therefore torque losses of the internal combustion engine become too great on account of the excessively large retarded-adjustment angle,
- fuel being injected into the combustion chamber both in the compression stroke and in a working stroke in the catalytic converter heating operating mode,
- retarded-adjustment angles of the ignition angle which are relevant for knock control being calculated by means of an adaptable calculation rule or being stored in, and read out of, an adaptation characteristic diagram,
- the adaptation characteristic diagram for at least one operating parameter being divided into regions, to each of which is assigned a respective retarded-adjustment angle,
- a separate adaptation characteristic diagram, or a respective separate adjustable calculation rule, being provided for each of the at least two operating states,
- the current retarded-adjustment angle being read out of the adaptation characteristic diagram of the new operating state or being calculated by means of the new adaptable calculation rule in the event of a change in operating state,
- retarded-adjustment angles being stored in the adaptation characteristic diagrams, or the calculation rule being adapted, as a function of knock of the internal combustion engine.

2. Method according to Claim 1, in which the adaptation characteristic diagrams provided for the at least two operating states, or the calculation rules provided for the at least two operating states, also differ in a cylinder-specific manner.

3. Method according to one of the preceding claims, in which a current retarded-adjustment angle is stored when the value leaves a region of the adaptive characteristic diagram,
- if the current retarded-adjustment angle is later, by a certain applicable angle, than the retarded-adjustment angle previously stored for the region which the value has just left.

4. Method according to one of the preceding claims, in which a current retarded-adjustment angle, which is earlier than the previously stored retarded-adjustment angle, is stored if the current retarded-adjustment angle has already been used for a certain period of time.

5. Device for adaptive knock control of a petrol direct fuel injection internal combustion engine which is operated in least two of the homogeneous, homogeneous-lean, stratified charge, homogeneous-stratified-charge, catalytic converter heating and knock prevention operating states,
- fuel being injected once into a combustion chamber in an intake stroke in the homogeneous operating mode, the injected fuel quantity being dimensional such that the air/fuel ratio λ is approximately 1,
- the homogeneous-lean operating mode corresponding to the homogeneous operating mode, but with the air/fuel ratio obtained being considerably greater than 1,
- the fuel being injected into the combustion chamber so late, that is to say in a compression stroke, in the stratified charge operating mode that there is no longer a uniform distribution of the fuel,
- fuel being injected both in the intake stroke and in the compression stroke in the homogeneous-stratified-charge operating mode, as a result of which a lean basic mixture which is distributed uniformly in the combustion chamber, and into which a rich, highly inflammable stratified cloud is discharged in the vicinity of the spark plug is generated by the first injection,
- fuel being injected both in the intake stroke and in the compression stroke in the homogeneous-knock-prevention operating mode, the knock prevention operating mode however then being implemented when the retarded-adjustment angle of the ignition angle obtained on account of knock becomes too large and therefore torque losses of the internal combustion engine become too great on account of the excessively large retarded-adjustment angle,
- fuel being injected into the combustion chamber both in the compression stroke and in a working stroke in the catalytic converter heating operating mode,
- retarded-adjustment angles of the ignition angle which are relevant for knock control being calculated by means of an adaptable calculation rule or being stored in, and read out of, an adaptation characteristic diagram,
- the adaptation characteristic diagram for at least one operating parameter being divided into regions, to each of which is assigned a respective retarded-adjustment angle,
- a separate adaptation characteristic diagram, or a respective separate adjustable calculation rule, being provided for each of the at least two operating states,
- the current retarded-adjustment angle being read out of the adaptation characteristic diagram of the new operating state or being calculated by means of the new adaptable calculation rule in the event of a change in operating state.,
- retarded-adjustment angles being stored in the adaptation characteristic diagrams, or the calculation rule being adapted, as a function of knock of the internal combustion engine.

6. Device according to Claim 5, in which the adaptation characteristic diagrams provided for the at least two operating states, or the calculation rules provided for the at least two operating states, also differ in a cylinder-specific manner.

7. Device according to one of Claims 5 or 6, in which a current retarded-adjustment angle is stored when the value leaves a region of the adaptive characteristic diagram,
- if the current retarded-adjustment angle is later, by a certain applicable angle, than the retarded-adjustment angle previously stored for the region which the value has just left.

8. Device according to one Claims 5 to 7, in which a current retarded-adjustment angle, which is earlier than the previously stored retarded-adjustment angle, is stored if the current retarded-adjustment angle has already been used for a certain period of time.

## Revendications

1. Procédé de régulation adaptative du cliquetis d'un moteur à combustion interne à injection directe de carburant fonctionnant dans au moins deux états de fonctionnement parmi les états homogène, homogène-pauvre, à charge stratifiée, homogène-à charge stratifiée, par chauffage catalytique et anti-cliquetis, selon lequel
- dans le mode de fonctionnement homogène, le carburant est injecté une fois dans une chambre de combustion dans une course d'aspiration, la quantité de carburant injectée étant définie de manière à ce que le rapport carburant/ air λ soit d'environ 1,
- le mode de fonctionnement homogène-pauvre correspond au mode de fonctionnement homogène, le rapport carburant/air réalisé étant néanmoins largement supérieur à 1,
- dans le mode de fonctionnement à charge stratifiée, le carburant est injecté dans la chambre de combustion si tard, c'est-à-dire dans une course de compression, qu'une répartition homogène du carburant n'est plus possible,
- dans le mode de fonctionnement homogène-à charge stratifiée, l'injection se fait aussi bien dans la course d'aspiration que dans la course de compression, ce qui permet de générer avec la première injection dans la chambre de combustion un mélange de base pauvre réparti homogènement dans lequel un nuage stratifié riche très inflammable est déposé à proximité de la bougie d'allumage pendant la deuxième injection,
- dans le mode de fonctionnement homogène anti-cliquetis, l'injection se fait dans la course d'aspiration et dans la course de compression, le mode de fonctionnement anti-cliquetis étant néanmoins employé lorsque l'angle de retard de l'angle d'allumage obtenu en raison des cliquetis est trop important et donc qu'une perte de couple du moteur à combustion interne par l'angle de retard important est également trop importante,
- dans le mode de fonctionnement par chauffage catalytique, l'injection du carburant dans la chambre de combustion se fait aussi bien dans la course de compression que dans une course de travail,
- des angles de retard de l'angle d'allumage pertinents pour une régulation de cliquetis sont calculés à l'aide d'une règle de calcul adaptable ou enregistrés dans un champ caractéristique d'adaptation et lus à partir de ce champ caractéristique d'adaptation,
- le champ caractéristique d'adaptation est divisé, pour au moins un paramètre de fonctionnement, en zones auxquelles est respectivement associé un angle de retard,
- un champ caractéristique d'adaptation séparé ou une règle de calcul séparée adaptable étant respectivement prévu pour les au moins deux états de fonctionnement,
- en cas de changement de l'état de fonctionnement, l'angle de retard actuel est lu à partir du champ caractéristique d'adaptation du nouvel état de fonctionnement ou calculé à l'aide de la nouvelle règle de calcul adaptable, et
- en fonction du cliquetis du moteur à combustion interne, on effectue un enregistrement des angles de retard dans les champs caractéristiques d'adaptation, ou une adaptation de la règle de calcul.

2. Procédé selon la revendication 1,
**caractérisé en ce que**
les champs caractéristiques d'adaptation prévus pour les au moins deux états de fonctionnement ou les règles de calcul prévues pour les au moins deux états de fonctionnement se distinguent en plus individuellement par cylindre.

3. Procédé selon l'une quelconque des revendications précédentes,
**caractérisé en ce qu'**
on enregistre un angle de retard actuel lorsqu'une zone du champ caractéristique adaptatif est quittée,
- lorsque l'angle de retard actuel est postérieur d'un angle défini applicable à l'angle de retard enregistré jusqu'ici pour la zone venant d'être quittée.

4. Procédé selon l'une quelconque des revendications précédentes,
**caractérisé en ce qu'**
un angle de retard actuel antérieur à l'angle de retard enregistré jusqu'ici est enregistré lorsque l'angle de retard actuel a déjà été utilisé sur une période donnée.

5. Dispositif de régulation adaptative du cliquetis d'un moteur à combustion interne à injection directe de carburant, fonctionnant dans au moins deux états de fonctionnement parmi les états homogène, homogène-pauvre, à charge stratifiée, homogène-à charge stratifiée, par chauffage catalytique et anti-cliquetis, dans lequel :
- dans le mode de fonctionnement homogène, le carburant est injecté une fois dans une chambre de combustion dans une course d'aspiration, la quantité de carburant injectée étant définie de manière à ce que le rapport carburant/air λ soit d'environ 1,
- le mode de fonctionnement homogène-pauvre correspond au mode de fonctionnement homogène, le rapport carburant/ air réalisé étant néanmoins largement supérieur à 1,
- dans le mode de fonctionnement à charge stratifiée, le carburant est injecté dans la chambre de combustion si tard, c'est-à-dire dans une course de compression, qu'une répartition homogène du carburant n'est plus possible,
- dans le mode de fonctionnement homogène-à charge stratifiée, l'injection se fait aussi bien dans la course d'aspiration que dans la course de compression, ce qui permet de générer avec la première injection dans la chambre de combustion un mélange de base pauvre réparti homogènement dans lequel un nuage stratifié riche très inflammable est déposé à proximité de la bougie d'allumage pendant la deuxième injection,
- dans le mode de fonctionnement homogène anti-cliquetis, l'injection se fait dans la course d'aspiration et dans la course de compression, le mode de fonctionnement anti-cliquetis étant néanmoins employé lorsque l'angle de retard de l'angle d'allumage obtenu en raison des cliquetis est trop important et donc qu'une perte de couple du moteur à combustion interne par l'angle de retard important est également trop importante.
- dans le mode de fonctionnement par chauffage catalytique, l'injection du carburant dans la chambre de combustion se fait aussi bien dans la course de compression que dans une course de travail,
- des angles de retard de l'angle d'allumage pertinents pour une régulation de cliquetis sont calculés à l'aide d'une règle de calcul adaptable, ou enregistrés dans un champ caractéristique d'adaptation et lus à partir de ce champ caractéristique d'adaptation,
- le champ caractéristique d'adaptation est divisé, pour au moins un paramètre de fonctionnement, en zones auxquelles est respectivement associé un angle de retard,
- un champ caractéristique d'adaptation séparé ou une règle de calcul séparée adaptable est respectivement prévue pour les au moins deux états de fonctionnement,
- en cas de changement de l'état de fonctionnement, l'angle de retard actuel est lu à partir du champ caractéristique d'adaptation du nouvel état de fonctionnement ou calculé à l'aide de la nouvelle règle de calcul adaptable, et
- en fonction du cliquetis du moteur à combustion interne, le dispositif effectue un enregistrement des angles de retard dans les champs caractéristiques d'adaptation, ou une adaptation de la règle de calcul.

6. Dispositif selon la revendication 5,
**caractérisé en ce que**
les champs caractéristiques d'adaptation prévus pour les au moins deux états de fonctionnement ou les règles de calcul prévues pour les au moins deux états de fonctionnement se distinguent en plus individuellement par cylindre.

7. Dispositif selon l'une quelconque des revendications 5 ou 6,
**caractérisé en ce qu'**
un angle de retard actuel est enregistré lorsqu'une zone du champ caractéristique adaptatif est quittée,
- lorsque l'angle de retard actuel est postérieur d'un angle défini applicable à l'angle de retard enregistré jusqu'ici pour la zone venant d'être quittée.

8. Dispositif selon l'une quelconque des revendications 5 à 7,
**caractérisé en ce qu'**
un angle de retard actuel antérieur à l'angle de retard enregistré jusqu'ici est enregistré lorsque l'angle de retard actuel a déjà été utilisé sur une période donnée.
